# EUROPEAN PATENT APPLICATION

(11) **EP 4 039 591 A1**
(43) Date of publication of application: **10.08.2022**
(21) Application number: 22151491.2
(22) Date of filing: 14.01.2022
(51) Int. Cl.: B64C 30/00, G01H 17/00, G08G 5/00, G01C 23/00

(54) **METHODS AND SYSTEMS FOR AUTOMATIC ROUTE PLANNING**

(30) Priority: 03.02.2021 US 202117166592
(71) Applicant: Honeywell International Inc., Charlotte, NC 28202 (US)
(72) Inventor: BIALEK, Jason, Charlotte, 28202 (US)
(74) Representative: Haseltine Lake Kempner LLP

(57) **Abstract**

Disclosed are methods, systems, and non-transitory computer-readable medium for controlling a vehicle. In one embodiment, a first route plan having a starting point and an ending point may be generated, wherein the first route plan is based on at least one parameter and wherein the first route plan is configured to cause the vehicle to generate an overpressure event over areas where it is undesirable to have the environmental impact of the overpressure event. An operator input may then be received to change at least one operating parameter of the vehicle, and a second route plan may be generated based, at least in part, on inputs. The first route plan and the second route plan may be displayed on a display. Upon receiving inputs to select a route plan displayed on the display, actuator instructions are generated to control the vehicle to follow the selected route plan.

## Description

### TECHNICAL FIELD

Various embodiments of the present disclosure relate generally to methods and systems for an automatic route planning of a vehicle and, more particularly, to methods and systems for an automatic route planning for supersonic flight of a vehicle.

### BACKGROUND

Regulatory authorities currently restrict over-land supersonic flight of civilian aircraft (A/C) throughout much of the populated world. In the United States, for example, current Federal Aviation Administration (FAA) regulations prohibit supersonic flight of civilian A/C over land. Such restrictions are generally motived by noise abatement rationale and a desire to protect ground structures, such as building windows, from damage due to the pressure waves generated during supersonic air travel.

The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section.

### SUMMARY OF THE DISCLOSURE

According to certain aspects of the disclosure, systems and methods are disclosed for route planning of a vehicle.

In one embodiment, a method is disclosed for controlling a vehicle. The method comprises: generating a first route plan having a starting point and an ending point, wherein the first route plan is based on at least one parameter and wherein the first route plan is configured to cause the vehicle to generate an overpressure event; receiving an operator input to change at least one operating parameter of the vehicle; generating a second route plan based, at least in part, on the operator input; displaying the first route plan and the second route plan on a display; receiving an operator input to select a route plan displayed on the display; and generating actuator instructions to control the vehicle to follow the selected route plan.

In accordance with another embodiment, a system for controlling a vehicle is disclosed. The system comprises: a memory storing instructions; and a processor executing the instructions to perform a process including: generating a first route plan having a starting point and an ending point, wherein the first route plan is based on at least one parameter and wherein the first route plan is configured to cause the vehicle to generate an overpressure event; in response to receiving an operator input to change at least one operating parameter of the vehicle, generating a second route plan based, at least in part, on the operator input; displaying the first route plan and the second route plan on a display; and in response to receiving an operator input to select a route plan displayed on the display, generating actuator instructions to control the vehicle to follow the selected route plan.

In accordance with another embodiment, a non-transitory computer-readable medium is disclosed storing instructions that, when executed by a processor, cause the processor to perform a method for controlling a vehicle, the method comprises: generating a first route plan having a starting point and an ending point, wherein the first route plan is based on at least one parameter and wherein the first route plan is configured to cause the vehicle to generate an overpressure event; receiving an operator input to change at least one operating parameter of the vehicle; generating a second route plan based, at least in part, on the operator input; displaying the first route plan and the second route plan on a display; receiving an operator input to select a route plan displayed on the display; and generating actuator instructions to control the vehicle to follow the selected route plan.

Additional objects and advantages of the disclosed embodiments will be set forth in part in the description that follows, and in part will be apparent from the description, or may be learned by practice of the disclosed embodiments.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 is a block diagram of a flight management system (FMS) implemented in a vehicle, according to one or more embodiments.
FIG. 2 is a flowchart illustrating an exemplary method of automatically generating a revised route plan based on one or more operating parameters of a vehicle, according to one or more embodiments.
FIG. 3 illustrates route plans generated on a vehicle display device, according to one or more embodiments.
FIG. 4 is a flow chart illustrating an exemplary method of automatically generating a plurality of revised route plans based on one or more operating parameters of a vehicle, according to one or more embodiments.
FIG. 5 illustrates route plans generated on a vehicle display device, according to one or more embodiments.

### DETAILED DESCRIPTION

Various embodiments of the present disclosure relate generally to methods and systems for an automatic route planning (e.g., flight planning) of a vehicle and, more particularly, to methods and systems for an automatic route planning for supersonic flight of a vehicle.

In view of the restrictions discussed above, supersonic flight may present several challenges. As a first example, supersonic flight may be limited by certification authorities (e.g., FAA), such as minimum/floor requirements that dictate a minimum altitude that a vehicle may cruise at supersonic, maximum Mach speed requirements (based on altitude) for a geographic region, etc. As a second example, supersonic vehicles may need to plan a route in compliance with these requirements, especially with consideration of any sonic booms generated during flight and the effect of these sonic booms on the geographic region. Therefore, determining a route for a vehicle based on sonic booms and the geographic regions over which the vehicle travels may be a challenge.

The present disclosure is directed to overcoming one or more of the above challenges. In general, the present disclosure is directed to systems and methods for automatically planning a route of a vehicle. For instance, a system of the present disclosure may determine whether a supersonic operation and an associated boom footprint of the vehicle will occur over a target location, even if the supersonic operation and/or associated boom footprint are at an acceptable dB level at a few thousand feet over that target location; and, if so, perform an automatic route planning of the vehicle to meet maximum dBs limitations at a certain number of feet over specific target locations like population centers, national parks, or other desired areas. The automatic route planning may include obtaining flight plan clearance data or using a previously defined route; generating a route plan based on the clearance data; and generating actuator instructions to execute the route plan. Subsequently, the route plan may be displayed to an operator to inform the operator of the potential risks of following the route plan, e.g., the plan when displayed may show there will be supersonic operation of a vehicle over a target location (e.g., a location on the ground), so as to diminish sonic booms over a geographic location to comply with certification authorities. Furthermore, the system of the present disclosure may determine and display a route plan that avoids populated areas, supersonic flight restriction areas, and/or certain weather conditions, such that the vehicle operator may determine which corridors the vehicle may fly at the target altitude, so as to reduce sonic booms over populated areas, avoid areas where sonic booms are not allowed, and/or avoid detrimental weather conditions (as weather is a complication in already non-standard operating condition). Moreover, the system of the present disclosure may override a supersonic flight restriction, in response to a user input or based on a convergence analysis showing adjustments to route or altitude to allow operations over certain corridors with adjustments made in real time (e.g., operator or user inputs are immediately reflected in the display to allow quick and real-time visualization of any sonic booms impact and how that impact can be shifted to a less populated area). In addition, the system of the present disclosure allows visualization of how a change an altitude of the vehicle reduces sonic booms over areas of interest or concern (populated areas, areas where sonic booms are not allowed, undesirable weather conditions, restricted areas, etc.). Therefore, the systems and methods of the present disclosure may determine a route plan of a vehicle traveling at supersonic speeds while considering various criteria (e.g., corridors, population, weather, and/or supersonic flight restrictions).

While this disclosure describes the systems and methods with reference to aircraft, it should be appreciated that the present systems and methods may be applicable to management of vehicles in general, including automobiles, boats, drones, spacecraft, or any other autonomous or non-autonomous vehicles equipped with components capable of performing the techniques discussed herein.

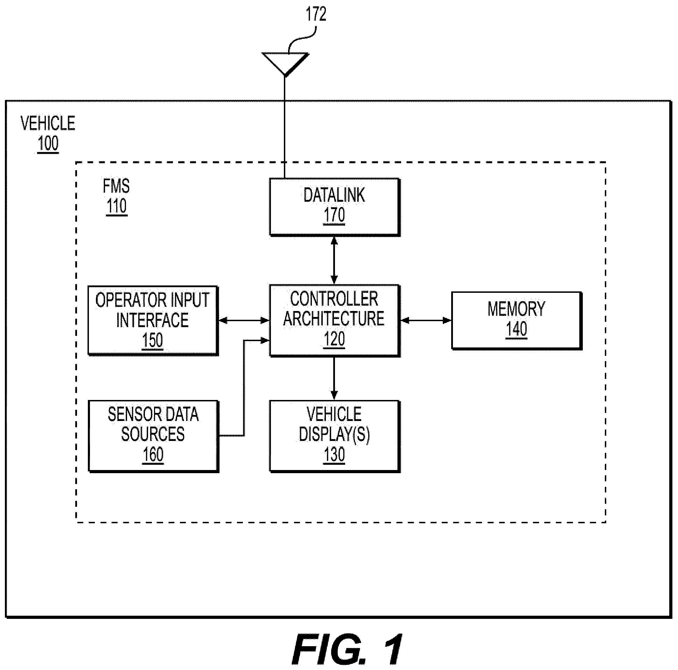

FIG. 1 is a block diagram of a flight management system (FMS) implemented in a vehicle, according to one or more embodiments. FMS 110 may assist in the generation of route plans for vehicles based on, e.g., sonic booms (overpressure events) resulting from data received. The data to generate the route plans may be received, at least in part, from an operator of the vehicle. As schematically depicted in FIG. 1, FMS 110 may include the following components or subsystems, each of which may assume the form of a single device or multiple interconnected devices: a controller architecture 120, at least one vehicle display device 130, computer-readable storage media or memory 140, and an operator input interface 150 (e.g., a graphical user interface, analog interface, or any other operator input mechanism). FMS 110 may further contain sensor data sources 160 including , for example, an array of vehicle sensors providing, e.g., a speed of the vehicle, an altitude of the vehicle, and the like. FMS 110 may also contain a datalink subsystem 170 including an antenna 172, which may wirelessly transmit data to and receive data from various sources external to FMS 110, such as a cloud-based forecasting service of the type discussed herein.

Although schematically illustrated in FIG. 1 as a single unit, the individual elements and components of FMS 110 can be implemented in a distributed manner utilizing any practical number of physically-distinct and operatively-interconnected pieces of hardware or equipment. When FMS 110 is utilized to construct supersonic route plans for a manned vehicle (i.e., a vehicle that carries an operator onboard), the various components of FMS 110 may typically all be located onboard vehicle 100. Comparatively, in implementations in which FMS 110 is utilized to construct route plans for a remotely-controlled vehicle, e.g., an unmanned aerial vehicle (UAV), certain components of FMS 110 may be carried by the remotely-controlled vehicle 100, while other components may be situated at the ground-based station or facility from which the remotely-controlled vehicle 100 is piloted. For example, in this latter instance, vehicle display device 130, operator input interface 150, and some portion of memory 140 may be located off board the remotely-controlled vehicle 100. It will be understood, however, that any element illustrated in FIG. 1 for displaying and/or calculating a display of a flight path based on a sonic boom may be contained onboard or off board vehicle 100.

The term "controller architecture" may broadly encompass those components utilized to carry out or otherwise support the processing functionalities of FMS 110. Accordingly, controller architecture 120 can encompass or may be associated with any number of individual processors, flight control computers, navigational equipment pieces, computer-readable memories (including or in addition to memory 140), power supplies, storage devices, interface cards, and/or other suitable components. Controller architecture 120 may include or cooperate with any number of firmware and/or software programs (e.g., computer-readable instructions) for carrying-out the various process tasks, calculations, and control/display functions described herein. Controller architecture 120 may exchange data with one or more external sources to support operation of FMS 110. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

Memory 140 may include any number and/or type of storage media suitable for storing computer-readable code or instructions, as well as other data generally supporting the operation of FMS 110. In certain embodiments, memory 140 may contain one or more databases, such as geographical (terrain), runway, navigational, and historical weather databases, which may be updated on a periodic or iterative basis to ensure data is up-to-date. The databases maintained in memory 140 may be shared by other systems onboard vehicle 100, such as an Enhanced Ground Proximity Warning System (EGPWS) or a Runway Awareness and Advisory System (RAAS). Memory 140 may also store one or more values associated with sonic boom formation (e.g., an overpressure event). In at least some implementations of FMS 110, one or more overpressure profiles specific to vehicle 100, for example, a range of vehicle 100 types may be stored within memory 140. Additional discussion of such vehicle-specific overpressure profiles are provided below.

Sensor data sources 160 may supply various types of data or measurements to controller architecture 120 during operation of vehicle 100. Such data or measurements may include, but are not limited to, inertial reference system measurements, Flight Path Angle (FPA) measurements, airspeed data, groundspeed data, altitude data, attitude data including pitch data and roll measurements, yaw data, data related to vehicle 100 weight, time/date information, heading information, atmospheric conditions data, flight path data, flight track data, radar altitude data, geometric altitude data, wind speed and direction data, and fuel consumption data. Further, in certain embodiments of FMS 110, controller architecture 120 and other components of FMS 100 may be included within or cooperate with any number and type of systems commonly deployed onboard vehicle 100 including, but not limited to, an Attitude Heading Reference System (AHRS), an Instrument Landing System (ILS), GNSS Landing System (GLS), and/or an Inertial Reference System (IRS).

With continued reference to FIG. 1, vehicle display device 130 (or vehicle display devices 130) may include any number and type of image generating devices on which one or more avionic displays may be produced. When FMS 110 is utilized to construct route plans for a manned vehicle 100, vehicle display device 130 may be affixed to a static structure of vehicle 100 as, for example, a Head Down Display (HDD) or Head Up Display (HUD), or Head Mounted Display (HMD) like a "Near-To-Eye" unit. Alternatively, vehicle display device 130 may assume the form of a movable display device, e.g., a pilot-worn display device, or a portable display device, such as an Electronic Flight Bag (EFB), a laptop, or a tablet computer carried into vehicle 100 by an operator. Similarly, when FMS 110 is utilized to construct route plans to pilot a remotely-controlled vehicle 100, vehicle display device 130 may be realized as an HDD or HUD unit affixed to the static structure of a control facility, a portable electronic device carried into such a control facility by an operator, or a movable display device worn by an operator either while flying the vehicle or when remotely operating a remotely-controlled vehicle 100.

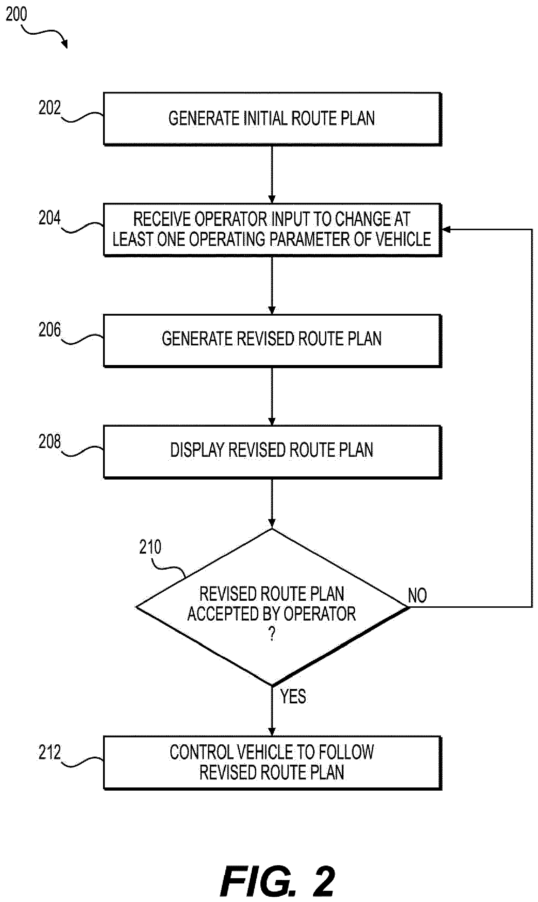

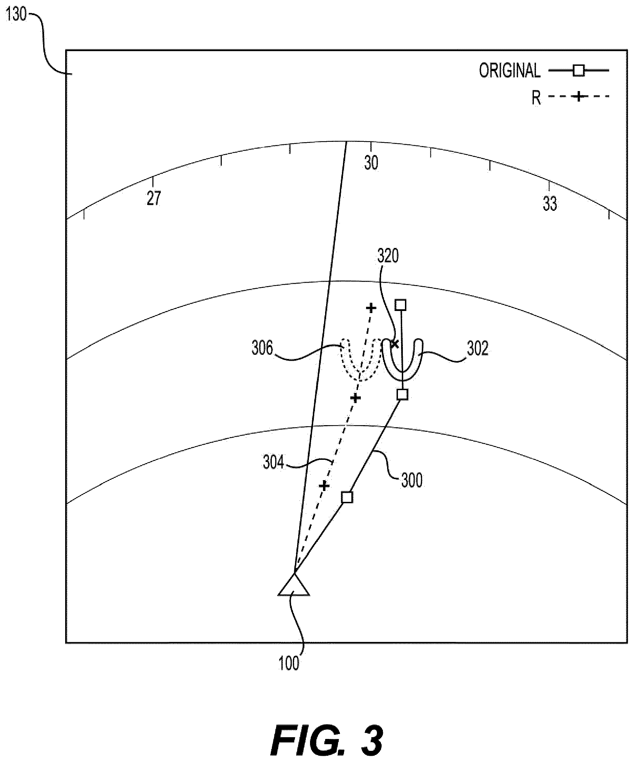

At least one avionic display (e.g., an avionic display illustrated in FIG. 3) may be generated on vehicle display device 130 during operation of FMS 100. The term "avionic display" may include, but may not be limited to, an aircraft-related display, and may display data in a textual, graphical, cartographical, or any other suitable format. The avionic display displayed on vehicle display device 130 may be generated to include various visual elements or graphics, which may be referenced by a pilot during the supersonic flight planning process. Such graphics may include, for example, textual readouts relating to route plan criteria or text annunciations indicating the revised or updated route plans generated by FMS 110 based on, e.g., an overpressure of vehicle 100. The avionic display or displays generated by FMS 110 may include alphanumerical input displays of the type commonly presented on the screens of Multifunction Control and Display Units (MCDUs), Control Display Units (CDU), or Touch Screen Controllers (TSCs) for example. FMS 110 can also generate various other types of displays on which symbology, text annunciations, and other graphics pertaining to route planning and to the revised or updated route plan(s). For example, FMS 110 may generate graphics on one or more two-dimensional (2D) avionic displays, such as a horizontal or vertical navigation avionic display, a Primary Flight Display (PFD), or an exocentric three-dimensional (3D) avionic display. A method, which may be implemented by FMS 110 in performing processing tasks related to boom-regulated route planning, will now be described in conjunction with FIG. 2.

FIG. 2 is a flowchart illustrating an exemplary method of automatically generating a revised route plan based on one or more operating parameters of a vehicle, according to one or more embodiments. Method 200 may be implemented by FMS 100 to improve route planning by calculating revised (e.g., alternative) route(s) for vehicle 100, displaying the route(s) to the operator of vehicle 100, and/or controlling vehicle 100 to follow the revised route(s). Method 200 may include a number of computer-implemented functions or process steps performed by a central processing unit e.g., central processing unit. These functions or steps are non-limiting, and additional steps may be performed. Further, certain steps may be omitted and/or the illustrated steps may be performed in different sequences than those shown in FIG. 2.

In Step 202, an initial route plan may be generated. This route plan may be generated to include a start point (e.g., a first waypoint) and an end point (e.g., a second waypoint). The route plan may be separated into one or more segments. For example, multiple waypoints may be included along the route. These waypoints may be determined upon considering one or more factors that might impact the operation and/or navigation of vehicle 100, such as a change in one or more parameters of vehicle 100 including, but not limited to, a speed, a heading, an altitude, or the like. The initial route plan may be generated based on information contained in memory 140, information transmitted from a base station to vehicle 100 via antenna 172, and/or a combination of both information obtained from the base station and information saved in memory 140. Additionally, an operator may select one or more inputs, e.g., a destination, one or more targets to avoid (latitude/longitude and a radius around that latitude/longitude or a complex or asymmetrical boundary based on a city or a population center boundary data), or other data, via operator input interface 150. Controller architecture 120 may generate the initial route plan using information from any one or more of these sources. Once plotted, the initial route plan may be displayed to the operator on vehicle display device 130. For example, as shown in FIG. 3, the initial route plan may be displayed with multiple waypoints, as will be described below.

In Step 204, an operator input may be received via operator input interface 150. The operator input may be a change, or a desired change, to one or more operating parameters, such as one or more of a speed change, an altitude change, a heading change, etc. The operator input may be based on a desire to change a flight time, avoid a geographical area, avoid a weather pattern, etc. The operator input may change an effect of vehicle 100. For example, increasing the speed of vehicle 100 may cause vehicle 100 to create an overpressure events at certain altitudes and ranges. This overpressure envelope and potential events (dB profiles at certain locations) may be undesirable in certain scenarios, e.g., if vehicle 100 is traveling over a city, a populated area, or other geographical area designated by a regulatory body. Therefore, data may be obtained from vehicle 100, a cloud-based system, or a ground-based system storing population data indicating population density and/or distribution, and/or flight restrictions related to overpressure events. The operator may consider the obtained data in entering the operator input. Alternatively, or additionally, inputting the change, or desired change, may cause the route plan to change such that vehicle 100 may avoid or travel near but not through an undesirable weather event (e.g., a weather event that may be hazardous to vehicle 100) but without resulting in an overpressure event occurring too close to an area of concern (population center, national parks, restricted areas, or other areas where overpressure events are undesirable).

In Step 206, the revised route plan may be generated. It will be understood that the revised route plan may be generated regardless of whether the route plan is capable of being performed. For example, even in the event the revised route plan causes vehicle 100 to violate a regulation, travel near or through a undesirable weather event, or experience other undesirable event, the revised route plan may be generated and, in Step 208, the revised route plan options may be displayed on vehicle display device 130. In this manner, the operator may view the revised route plan options based on the change in parameter(s) to vehicle 100 and make an informed decision.

The operator may accept or decline the revised route plan options presented in Step 210. For example, the revised route plan may violate one or more regulations (e.g., based on an overpressure event caused by vehicle 100) or cause vehicle 100 to travel through a weather event, vehicle 100 may not carry enough fuel to complete the route based on the revised route plan, etc. In the event the revised route plan is not accepted by the operator in Step 210 (e.g., a response of "NO" via operator input interface 150), the method loops back to Step 204 to receive operator input to again change one or more operating parameters of vehicle 100. In this manner, the operator may view multiple revised route plans based on different parameter changes, and the operator may select the revised route plan that suits the needs or decisions of the operator. In some embodiments, only the original route plan and one of the revised route plans may be displayed at the same time. For example, no two revised route plans may be displayed at the same time.

In the event the revised route plan is accepted by the operator in Step 210 (e.g., a response of "YES" via operator input interface 150), vehicle 100 may be controlled based on the revised route plan in Step 212. For example, the revised route plan may include one or more different waypoints, segments, starting point, and/or ending point. Controller architecture 120 may control vehicle 100, alone or in combination with one or more systems (e.g., a cloud-based system, a ground-based system, etc.), to travel along the revised route plan. The revised route plan may violate one or more regulations, cause vehicle 100 to travel through a weather event, or cause other undesirable scenario. The operator may be capable of selecting the revised flight path based on information provided via FMS 110, information received from a ground-based station, and/or from a cloud-based system via antenna 172, as well as information or knowledge known to the operator. For example, a regulation may have changed and the computer systems may not have been updated. In this scenario, the operator may travel over a geographical location that the revised route plan indicates as unnavigable, but which the operator knows to be navigable. Alternatively, or additionally, vehicle 100 may experience mechanical complications, may be low on fuel, or individuals onboard vehicle 100 may need assistance that requires the route plan to be revised. In these scenarios, it may be necessary to violate one or more regulations and/or travel through one or more weather events due to an emergency.

FIG. 3 illustrates route plans generated on a vehicle display device, according to one or more embodiments. For instance, a vehicle display device 130 shown in FIG. 1 may generate an original route plan and/or a revised route plan, as will be discussed in detail below. While not visually depicted in FIG. 1 and FIG. 3, vehicle display device 130 may include one or more input devices, such as a graphical user interface, one or more analog input devices, or the like. Additionally, vehicle display device 130 may receive inputs from operator input interface 150, which may include one or more of the graphical user interface and/or analog input devices. As shown in FIG. 3, multiple route plans may be displayed at once. These route plans may be identified by a legend, such as the legend in the upper right corner of vehicle display device 130, which identifies graphics associated with an original route plan ("ORIGINAL") and graphics associated with a revised route plan ("R"), as will be described herein. FMS 110 may further generate other graphics to aid the operator in deciding whether to select a revised route as the new route plan. For example, vehicle display device 130 may generate a 2D or 3D map with vehicle heading markers. The route plans may be superimposed over the map view presented. It will be understood that other perspectives are possible (e.g., a forward looking, three dimensional perspective). The route plans may be distinguished utilizing distinctive waypoint markers as shown in FIG. 3. If desired, other graphics may be provided on the map view, including, for example, a graphic of vehicle 100, a heading, a range ring graphic, and various symbols indicative of terrain, weather, and structures (not shown in FIG. 3 for clarity).

In one embodiment, an original route plan 300 may be illustrated by the solid line. Original route plan 300 may be divided into multiple segments, with waypoints identified by the squares. An overpressure event 302 that is predicted to occur based on parameters associated with original route plan 300 may be identified by the U-shaped member. In the example of FIG. 3, overpressure event 302 may occur in the third and last segment of original route plan 300 based on parameters of vehicle 100 in the last segment. A location 320 may be identified by the "X" on the screen, but may be identified by any other symbol and/or text. Location 320 may be a geographical location, e.g., a city, over which an overpressure event is not allowed by regulation. Based on the current trajectory of original route plan 300, overpressure event 302 may be predicted to occur at location 320, which may be undesirable.

The operator may change one or more parameters of vehicle 100 via operator input interface 150. For example, the operator may wish to determine whether changing a heading of vehicle 100 will avoid an overpressure event above location 320. After receiving the operator input, a revised route plan 304 may be generated on vehicle display device 130. Revised route plan 304 may be identified by the dashed line, and may include multiple segments separated by waypoints having a "+" shape. It will be understood that the waypoint(s) and/or segment(s) may be identified by any symbol(s). In this example, revised route plan 304 illustrates that the parameters input by the operator may also create an overpressure event 306. Yet, overpressure event 306 is shifted from overpressure event 302, such that overpressure event 306 does not occur over location 320. The operator may determine whether revised route plan 304 is a desired route plan. If yes, then the operator may select revised route plan 304 as the new route, as described herein with reference to Steps 210 and 212 in FIG. 2.

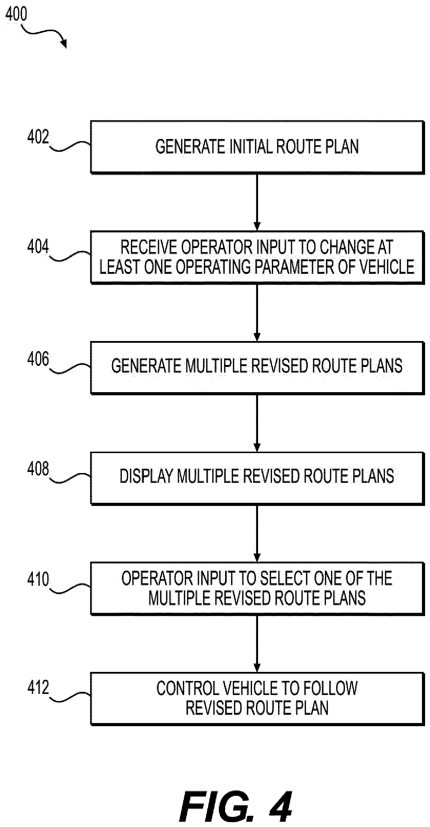

FIG. 4 is a flow chart illustrating an exemplary method of automatically generating a plurality of revised route plans based on one or more operating parameters of a vehicle, according to one or more embodiments. Method 400 may be implemented by FMS 100 to improve route planning by calculating revised (e.g., alternative) route(s) for vehicle 100, displaying the route(s) to the operator of vehicle 100, and/or by controlling vehicle 100 to follow the revised route(s). Method 400 may include a number of computer-implemented functions or process steps performed by a central processing unit e.g., central processing unit 620 discussed in reference to FIG. 6. These functions or steps are non-limiting, and additional steps may be performed. Further, certain steps may be omitted and/or the illustrated steps may be performed in different sequences than those shown in FIG. 4. Method 400 may include certain steps that are similar to the steps in method 200. For those steps of method 400 that are similar, reference will be made to the corresponding step in method 200.

In Step 402, an initial route plan may be generated. This route plan may be generated in a manner similar to that described with reference to Step 202 of method 200.

In Step 404, an operator input may be received via operator input interface 150. The operator input may be received in a manner similar to that described in reference to Step 204 of method 200. Additionally, the operator may change multiple parameters and/or may change a single parameter multiple times such that multiple revised route plans may be generated. A prompt may be given to the operator to select parameters for each of a first revised route plan, a second revised route plan, and so on, until all desired parameter changes are input by the operator.

In Step 406, the multiple revised route plans may be generated. It will be understood that the revised route plans may be generated regardless of whether the route plans are capable of being performed. For example, even in the event the revised route plans cause vehicle 100 to violate a regulation, travel through a weather event, or experience other undesirable event, the revised route plans may be generated and, in Step 408, each of the revised route plans may be displayed on vehicle display device 130. In this manner, the operator may view each of the revised route plans based on the selected changes in parameters to vehicle 100.

In Step 410, the operator may select one of the multiple revised route plans. Alternatively, the operator may determine that none of the revised route plans are desirable, and may select the original route plan. Selection of the desired route plan may be made via vehicle display device 130, operator input interface 150, or any other input mechanism.

After the desired route plan is selected, vehicle 100 may be controlled based on the route plan selected in Step 410. Vehicle 100 may be controlled in Step 412 in a similar manner as described with respect to Step 212 in method 200.

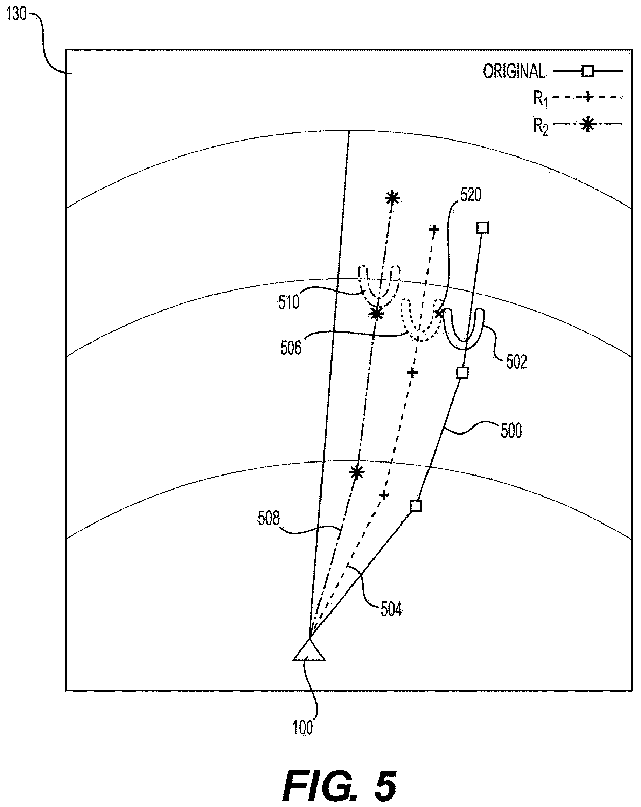

FIG. 5 illustrates route plans generated on a vehicle display device, according to one or more embodiments. For instance, a vehicle display device 130 shown in FIG. 1 may generate an original route plan and/or revised route plans, as will be discussed in detail below. While not visually depicted in FIG. 1 and FIG. 5, vehicle display device 130 may include one or more input devices, such as a graphical user interface, one or more analog input devices, or the like. Additionally, vehicle display device 130 may receive inputs from operator input interface 150, which may include one or more of the graphical user interface and/or analog input devices. Similar to the embodiment of FIG. 3, multiple route plans may be displayed at once in the embodiment shown in FIG. 5. These route plans may be identified by a legend, such as the legend in the upper right corner of vehicle display device 130, which identifies graphics associated with an original route plan ("ORIGINAL"), graphics associated with a first revised route plan ("Ri"), and graphics associated with a second revised route plan ("R₂"), as will be described herein. FMS 110 may further generate other graphics to aid the operator in deciding whether to select a revised route as the new route plan. Depending on the route, weather conditions, and other factors, any number greater than two alternate routes could be presented limited only by the ability to display the options to the operator. For example, vehicle display device 130 may generate a 2D or 3D map with vehicle heading markers. The route plans may be superimposed over the map view presented. It will be understood that other perspectives are possible (e.g., a forward looking, three dimensional perspective). The route plans may be distinguished utilizing distinctive waypoint markers as shown in FIG. 5. If desired, other graphics may be provided on the map view, including, for example, a graphic of vehicle 100, a heading, a range ring graphic, and various symbols indicative of terrain, weather, different atmospheric conditions that affect overpressure propagation through the atmosphere and structures (not shown in FIG. 5 for clarity).

In one embodiment, an original route plan 500 may be illustrated by the solid line. Original route plan 500 may be divided into multiple segments, with waypoints identified by the squares. An overpressure event 502 that is predicted to occur based on parameters associated with original route plan 500 may be identified by the U-shaped member. In the example of FIG. 5, overpressure event 502 may occur in the third and last segment of original route plan 500 based on parameters of vehicle 100 in the last segment. A location 520 may be identified by the "X" on the screen, but may be identified by any other symbol and/or text. Location 520 may be a geographical location, e.g., a city, over which an overpressure event is not allowed by regulation or desired by the operator. Based on the current trajectory of original route plan 500, overpressure event 502 may be predicted to occur at location 520, which may be undesirable.

The operator may change parameters of vehicle 100 via operator input interface 150. For example, the operator may wish to determine whether changing a heading, a speed, or the like of vehicle 100 will avoid an overpressure event above, or within a certain range of location 520 as defined by the operator, location 520. After receiving the operator input, a first revised route plan 504 may be generated on vehicle display device 130. First revised route plan 504 may be identified by the dashed line, and may include multiple segments separated by waypoints having a "+" shape. It will be understood that the waypoint(s) and/or segment(s) may be identified by any symbol(s) or colors. In this example, first revised route plan 504 illustrates that the parameters input by the operator may also create an overpressure event 506. Via the display shown in FIG. 5, the operator will be able to tell that overpressure event 506 will also likely occur over location 520.

A second revised route plan 508 may be generated on vehicle display device 130 based on a second set of parameters altered and input by the operator. Second revised route plan 508 may be identified by the long-short-long dashed line, and may include multiple segments separated by waypoints having a "*" shape. It will be understood that the waypoint(s) and/or segment(s) may be identified by any symbol(s) or colors. In this example, second revised route plan 508 illustrates that the parameters input by the operator may also create an overpressure event 510. Yet, overpressure event 510 is shifted from overpressure events 502 and 506, indicating overpressure event 510 will likely not occur over location 520. The operator may determine whether revised route plan 508 is a desired route plan. If yes, then the operator may select revised route plan 508 as the new route, as described herein with reference to Step 410 in FIG. 4. Alternatively, as described herein, the operator may select any route plan shown on vehicle display device 130.

Further, a computer may be configured to execute techniques described herein. Specifically, the computer (or platform as it may not be a single physical computer infrastructure) may include a data communication interface for packet data communication. The platform may also include a central processing unit ("CPU"), in the form of one or more processors, for executing program instructions. The platform may include an internal communication bus, and the platform may also include a program storage and/or a data storage for various data files to be processed and/or communicated by the platform such as ROM and RAM, although the platform may receive programming and data via network communications. The platform also may include input and output ports to connect with input and output devices such as keyboards, mice, touchscreens, monitors, displays, etc. The various system functions may be implemented in a distributed fashion on a number of similar platforms, to distribute the processing load. Alternatively, the systems may be implemented by appropriate programming of one computer hardware platform.

The general discussion of this disclosure provides a brief, general description of a suitable computing environment in which the present disclosure may be implemented. In one embodiment, any of the disclosed systems, methods, and/or graphical user interfaces may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: Internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, Quantum computers, networked parallel non-Quantum computers, or multiple Quantum computers networked together, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the Internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer of the mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The terminology used above may be interpreted in its broadest reasonable manner, even though it is being used in conjunction with a detailed description of certain specific examples of the present disclosure. Indeed, certain terms may even be emphasized above; however, any terminology intended to be interpreted in any restricted manner will be overtly and specifically defined as such in this Detailed Description section. Both the foregoing general description and the detailed description are exemplary and explanatory only and are not restrictive of the features, as claimed.

As used herein, the terms "comprises," "comprising," "having," including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, relative terms, such as, for example, "about," "substantially," "generally," and "approximately" are used to indicate a possible variation of ±10% in a stated value. The term "exemplary" is used in the sense of "example" rather than "ideal." As used herein, the singular forms "a," "an," and "the" include plural reference unless the context dictates otherwise.

Other embodiments of the disclosure will be apparent to those skilled in the art from consideration of the specification and practice of the embodiments disclosed herein. It is intended that the specification and examples be considered as exemplary only, with a true scope and spirit of the embodiments being indicated by the following claims.

## Claims

1. A method for controlling a vehicle, the method comprising:
generating a first route plan having a starting point and an ending point, wherein the first route plan is based on at least one parameter and wherein the first route plan is configured to cause the vehicle to generate an overpressure event;
receiving an operator input to change at least one operating parameter of the vehicle;
generating a second route plan based, at least in part, on the operator input;
displaying the first route plan and the second route plan on a display;
receiving an operator input to select a route plan displayed on the display; and
generating actuator instructions to control the vehicle to follow the selected route plan.

2. The method of claim 1, wherein the displaying the first route plan and the second route plan includes displaying at least one symbol indicating the overpressure event.

3. The method of claim 1, wherein the generating the first route plan includes requesting and receiving data, or portions thereof, from one or more of a ground based system, a cloud based system, a vehicle based system, a weather system, or a data server, and
wherein the data includes at least one of a population data indicating population density or distribution, or flight restrictions on overpressure events.

4. The method of claim 1, further comprising:
receiving at least one additional operator input if the first route plan and the second route plan are not selected by the operator; and
generating at least one additional route plan based on the additional operator input, wherein the second route plan and the at least one additional route plan are not displayed on the display at the same time.

5. The method of claim 1, further comprising:
displaying at least one additional route plan on the display, and wherein the receiving the operator input includes a selection of the first route plan, the second route plan, or the at least one additional route plan.

6. The method of claim 1, wherein the receiving the operator input includes receiving an input via at least one of the vehicle, a ground-based system, or a cloud-based system.

7. The method of claim 1, wherein the first route plan and the second route plan are displayed on the display even if the vehicle being controlled along one or both of the first route plan or the second route plan would violate a regulation, travel through a weather event, or cause an emergency of the vehicle.

8. A system for controlling a vehicle, the system comprising:
a memory storing instructions; and
a processor executing the instructions to perform a process including:
generating a first route plan having a starting point and an ending point,
wherein the first route plan is based on at least one parameter and wherein the first route plan is configured to cause the vehicle to generate an overpressure event;
in response to receiving an operator input to change at least one operating parameter of the vehicle, generating a second route plan based, at least in part, on the operator input;
displaying the first route plan and the second route plan on a display; and
in response to receiving an operator input to select a route plan displayed on the display, generating actuator instructions to control the vehicle to follow the selected route plan.

9. The system of claim 8, wherein the displaying the first route plan and the second route plan includes displaying at least one symbol indicating the overpressure event or an area where the overpressure event or various dB levels of overpressure would exist in an atmosphere.

10. The system of claim 8, wherein the generating the first route plan includes requesting and receiving data, or portions thereof, from one or more of a ground based system, a cloud based system, a vehicle based system, a weather system, or a data server, and
wherein the data includes at least one of a population data indicating population density or distribution, or flight restrictions on overpressure events.

11. The system of claim 8, wherein the process further includes, in response to receiving at least one additional operator input if the first route plan and the second route plan are not selected by the operator, generating at least one additional route plan based on the additional operator input, wherein the second route plan and the at least one additional route plan are not displayed on the display at the same time.

12. The system of claim 8, wherein the process further includes displaying at least one additional route plan on the display, and wherein the receiving the operator input includes a selection of the first route plan, the second route plan, or the at least one additional route plan.

13. The system of claim 8, wherein the operator input is received via at least one of the vehicle, a ground-based system, or a cloud-based system.

14. The system of claim 8, wherein the first route plan and the second route plan are displayed on the display even if the vehicle being controlled along one or both of the first route plan or the second route plan would violate a regulation, travel through or adjacent an undesirable or hazardous weather event or area, or cause an emergency of the vehicle.
